# EUROPEAN PATENT SPECIFICATION

(11) **EP 0 878 374 B1**
(45) Date of publication and mention of the grant of the patent: **27.08.2003**
(21) Application number: 98108612.7
(22) Date of filing: 12.05.1998
(51) Int. Cl.: B62B 3/02, A47B 57/40, F16B 12/26

(54) **Cleaning trolley**
Reinigungswagen
Chariot de nettoyage

(30) Priority: 16.05.1997 IT VE970021 U
(43) Date of publication of application: 18.11.1998
(73) Proprietor: EUROMOP S.p.A., 35013 - Cittadella (IT)
(72) Inventor: Cervellin, Sergio, 35010 Villa del Conte (Padova) (IT)
(74) Representative: Piovesana, Paolo

(56) References cited:
- EP-A- 0 787 448
- DE-U- 9 402 530
- GB-A- 1 101 510
- GB-A- 2 229 487
- US-A- 3 664 274
- US-A- 4 998 023

## Description

This invention relates to an ecological trolley as defined in claim 1.

Ecological trolleys for large communities such as hospitals, canteens, etc., are known. They generally consist of a base structure provided with rotatable wheels and supporting two or more uprights to which a plurality of overlying shelves andlor cleaning articles are secured. Screws are generally used to secure the uprights to the base structure and the shelves to the uprights.

These known trolleys have however certain drawbacks, and in particular:
- for the seller, the trolley assembly is lengthy and laborious, this being carried out only at the time of purchase to avoid storage space problems,
- it is difficult to modify the composition of the structure, for example to change its intended use by the user, precisely because of the laboriousness of its assembly and dismantling.

DE-U-9402530 discloses a trolley comprising an undercarriage on steering castors, supporting a carrier superstructure. The latter and the undercarriage are modular plug systems with self-supporting base trough or grid. Support girders are releasably pluggable into the trough or grid and have suspension members for the cleaning implements and utensils and the carrier superstructure.

An object of the invention is to provide an ecological trolley which can be assembled and dismantled in a simple and comfortable manner.

A further object of the invention is to provide a trolley the composition of which can be easily modified.

A further object of the invention is to provide a trolley which is constructionally robust.

These and further objects which will be apparent from the ensuing description are attained according to the invention by an ecological trolley as described in claim 1.

The present invention is described in detail hereinafter with reference to the accompanying drawings, on which:
Figure 1 is a side view of a trolley according to the invention,
Figure 2 is a perspective view of a coupling element,
Figure 3 shows a closure cap,
Figure 4 shows the upper coupling element,
Figure 5 shows the uprights support element,
Figure 6 is a cross-section therethrought on the line VI-VI of Figure 1, and
Figure 7 shows a modified embodiment of the trolley.

As can be seen from the figures, the ecological trolley of the invention comprises substantially a base structure 2 of plastic construction supported by running wheels 4.

In the base structure there are provided seats 5 for the insertion of intermediate securing elements 6 for uprights 8 of substantially rectangular cross-section.

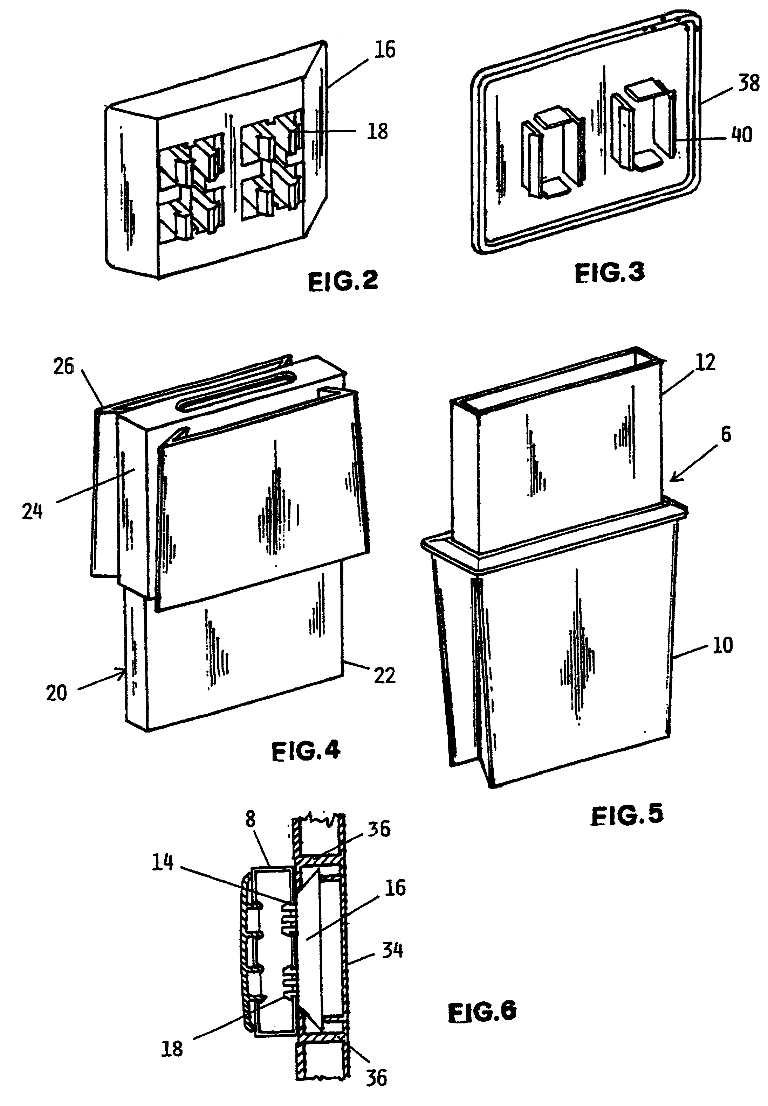

Each element 6 (see Figure 5) consists of a insertion connector 10 of double dovetail shape with its thickness decreasing towards the end, and a parallelepiped appendix 12 engagable in the bottom aperture of the upright 8.

Each upright 8 is of aluminium construction and comprises in its major surfaces a plurality of pairs of superposed holes 14.

The invention also comprises the use of a plurality of coupling elements 16 of substantially dovetail or isosceles trapezium cross-section and provided on their minor surfaces with elastically compressible fins 18.

The upper coupling element 20 consists of a parallelepiped part 22 engagable in the uprights, and a closure cap 24 provided on its major surfaces with two projecting prismatic parts 26, also of isosceles trapezium section.

The trolley of the invention is assembled in the following manner. After fixing the wheels 4 to the base 2, the insertion connectors 10 of the elements 6 are inserted into the appropriate seats, after which the uprights 8 are mounted by inserting the appendices 12 into the bottom apertures of the uprights.

The coupling elements 16 are then secured to the uprights by elastically engaging the fins 18 into the holes 14, after which shelves 19 or cleaning articles are applied to said coupling elements 16.

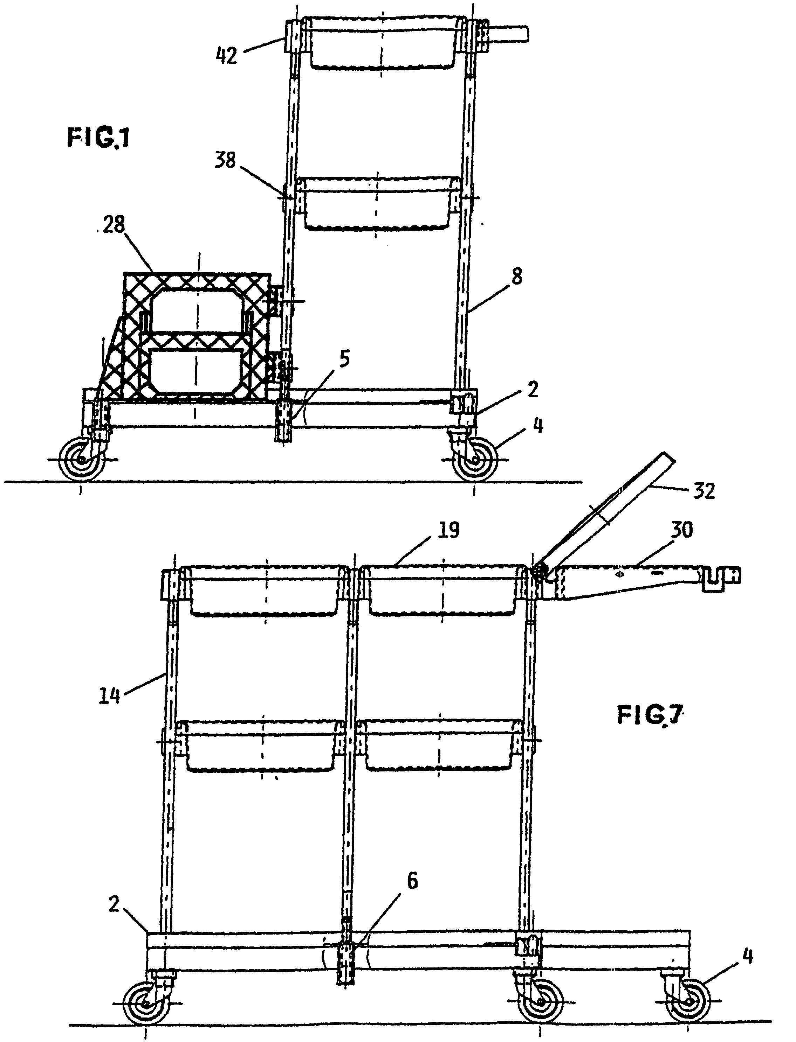

In particular, said articles can consist of a support 28 for a wringer (see Figure 1) or a support 30 for a refuse sack (see Figure 7) with relative lid 32.

Each shelf or cleaning article is provided with a bracket 34 which on its surface comprises a L-bent edge bounding a seat closed along the sides 36 and along the upper edge, and complementary to the overall shape of the dovetail portion of the coupling element 16 or 20.

For reasons of appearance, closure cap 38 provided with elastic fins 40 engaging in its hole are applied to the tubular upright 8 at that end distant from the end to which the coupling elements are fitted.

In the same manner a mask 42 is applied to the upper cap in correspondence with that appendix not engaged by the shelf, and has a shape complementary to the shape of the appendix.

From the aforegoing, it is apparent that the trolley of the invention has numerous advantages, and in particular:
- it allows simple and rapid assembly and dismantling while providing considerable robustness,
- it can be easily adapted to different uses by substituting the articles,
- it is of pleasant appearance because of the combination of plastic parts and metal parts.

## Claims

1. An ecological trolley comprising a base structure (2) provided with running wheels (4) and at least two uprights (8) which support a plurality of cleaning articles (19,28,30), **characterised in that** the cleaning articles are secured to the uprights (8) by profiled elements (16) which elastically engage in suitable holes (14) provided in the uprights (8) and are engageable by gravity by the cleaning articles.

2. A trolley as claimed in claim 1, **characterised in that** said profiled elements (16) engage elastically in the holes (14) and have a substantially dovetail cross-section.

3. A trolley as claimed in claim 1, **characterised in that** the uprights (8) are of substantially rectangular section and in them there engage the ends (12) of intermediate second elements (10) which also engage in corresponding seats provided in the base structure.

4. A trolley as claimed in claim 3, **characterised in that** the ends (12) of the intermediate second elements (10) which engage in the base structure (2) are of double dovetail shape.

5. A trolley as claimed in claim 4, **characterised in that** said ends slightly converge outwards.

6. A trolley as claimed in claim 1, **characterised in that** closure caps (38) can be fitted into the holes (14) provided in the uprights (8).

7. A trolley as claimed in claim 1, **characterised in that** coupling elements (20) engage in the upper end of the uprights (8), which elements (20) are provided with two appendices (26) of dovetail shape.

8. A trolley as claimed in claim 7, **characterised in that** the cleaning articles (19,28,30) are provided with brackets (34) having an edge which is L-bent to define a seat complementary to the coupling elements (20).

## Patentansprüche

1. Ökologischer Wagen, der eine Grundstruktur (2), die mit Laufrädern (4) versehen ist, und mindestens zwei Ständer (8) umfasst, welche eine Vielzahl von Reinigungsartikeln (19, 28, 30) tragen, **dadurch gekennzeichnet, dass** die Reinigungsartikel an den Ständern (8) durch Profilelemente (16) gesichert sind, welche elastisch in passende Löcher (14) eingreifen, die in den Ständern (8) vorgesehen sind, und durch die Schwerkraft der Reinigungsartikel eingreifen.

2. Wagen nach Anspruch 1, **dadurch gekennzeichnet, dass** die besagten Profilelemente (16) elastisch in die Löcher (14) eingreifen und einen im Wesentlichen schwalbenschwanzförmigen Querschnitt aufweisen.

3. Wagen nach Anspruch 1, **dadurch gekennzeichnet, dass** die Ständer (8) einen im Wesentlichen rechteckigen Querschnitt aufweisen und in sie die Enden (12) von dazwischen liegenden zweiten Elementen (10) eingreifen, welche ebenfalls in die korrespondierenden Sitze eingreifen, die in der Grundstruktur vorgesehen sind.

4. Wagen nach Anspruch 3, **dadurch gekennzeichnet, dass** die Enden (12) der dazwischen liegenden zweiten Elemente (10), welche in die Grundstruktur (2) eingreifen, eine doppelte Schwalbenschwanzförmige Form aufweisen.

5. Wagen nach Anspruch 4, **dadurch gekennzeichnet, dass** die besagten Enden leicht nach außen konvergieren.

6. Wagen nach Anspruch 1, **dadurch gekennzeichnet, dass** in die Löcher (14), die in den Ständern (8) vorgesehen sind, Verschlusskappen (38) eingesetzt werden können.

7. Wagen nach Anspruch 1, **dadurch gekennzeichnet, dass** Kupplungselemente (20) in das obere Ende der Ständer (8) eingreifen, welche Elemente (20) mit zwei schwalbenschwanzförmigen Ansätzen (26) versehen sind.

8. Wagen nach Anspruch 7, **dadurch gekennzeichnet, dass** die Reinigungsartikel (19, 28, 30) mit Stützen (34) versehen sind, welche eine L-förmig gebogene Kante aufweisen, um einen zu dem Kupplungselement (20) komplementären Sitz zu bilden.

## Revendications

1. Un chariot écologique comprenant une structure de base (2) munie de roues libres (4) et au moins deux montants (8) qui supportent une pluralité d'articles de nettoyage (19, 28, 30), **caractérisé en ce que** les articles de nettoyage sont fixés aux montants (8) par des éléments profilés (16) qui s'emboîtent d'une manière élastique dans des trous appropriés (14) ménagés dans les montants (8) et sont emboîtables par gravité avec les articles de nettoyage.

2. Un chariot comme revendiqué dans la revendication 1, **caractérisé en ce que** lesdits éléments profilés (16) s'emboîtent de manière élastique dans les trous (14) et ont sensiblement une section transversale de queue d'aronde.

3. Un chariot comme revendiqué dans la revendication 1, **caractérisé en ce que** les montants (8) sont de section sensiblement rectangulaire et dans ceux-ci s'emboîtent les extrémités (12) de deuxièmes éléments intermédiaires (10) qui s'emboîtent aussi dans des emplacements fournis dans la structure de base.

4. Un chariot comme revendiqué dans la revendication 3, **caractérisé en ce que** les extrémités (12) des deuxièmes éléments intermédiaires (10) qui s'emboîtent dans la structure de base sont en forme de double queue d'aronde.

5. Un chariot comme revendiqué dans la revendication 4, **caractérisé en ce que** lesdites extrémités convergent légèrement vers l'extérieur.

6. Un chariot comme revendiqué dans la revendication 1, **caractérisé en ce que** les couvercles de fermeture (38) peuvent être adaptés aux trous (14) ménagés dans les montants (8).

7. Un chariot comme revendiqué dans la revendication 1, **caractérisé en ce que** les éléments de couplage (20) s'emboîtent dans l'extrémité supérieure des montants (8), lesquels éléments (20) sont munis de deux appendices (26) en forme de queue d'aronde.

8. Un chariot comme revendiqué dans la revendication 7, **caractérisé en ce que** les articles de nettoyage (19, 28, 30) sont munis de supports (34) ayant un bord qui est coudé en L pour définir un emplacement complémentaire aux éléments de couplage (20).
